(19) Europäisches Patentamt
European Patent Office
Office européen des brevets

(11) EP 4 692 183 A1

# (12) EUROPEAN PATENT APPLICATION

published in accordance with Art. 153(4) EPC

(43) Date of publication:
**11.02.2026 Bulletin 2026/07**

(21) Application number: **24780235.8**

(22) Date of filing: **26.03.2024**

(51) International Patent Classification (IPC):
***C08J 5/18*** (2006.01) ***B65D 65/46*** (2006.01)
***C08L 29/04*** (2006.01) ***C08L 89/00*** (2006.01)

(52) Cooperative Patent Classification (CPC):
**B65D 65/46; C08J 5/18; C08L 29/04; C08L 89/00**

(86) International application number:
**PCT/JP2024/011808**

(87) International publication number:
**WO 2024/204121 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023055611**

(71) Applicant: **Mitsubishi Chemical Corporation**
**Tokyo 100-8251 (JP)**

(72) Inventors:
- **TERAZAWA, Madoka**
  **Tokyo 100-8251 (JP)**
- **KUDO, Yuuma**
  **Tokyo 100-8251 (JP)**

(74) Representative: **Vossius & Partner Patentanwälte Rechtsanwälte mbB**
**Siebertstrasse 3**
**81675 München (DE)**

## (54) WATER-SOLUBLE FILM, MEDICINE PACKAGING BODY USING SAME, AND METHODS FOR PRODUCING THESE

(57) A gelatin-containing water-soluble film having excellent water solubility, excellent mechanical properties such as film strength and elongation, and excellent sealability is provided as follows. The water-soluble film contains gelatin and a polyvinyl alcohol resin (A). The polyvinyl alcohol resin (A) contains a modified polyvinyl alcohol resin.

EP 4 692 183 A1

## Description

TECHNICAL FIELD

The present disclosure relates to a water-soluble film containing gelatin which is a naturally derived material. More particularly, the present disclosure relates to a water-soluble film containing gelatin and a polyvinyl alcohol resin, and a chemical agent package using the same.

BACKGROUND ART

Water-soluble films using gelatin which is a naturally derived material have been known as packaging materials for foods and the like. For example, an edible film with excellent solubility, heat sealability, and blocking properties is known, which is produced by mixing pectin, glycerin, and sucrose fatty acid ester with gelatin as a base and forming the mixture into a film (see PTL 1). A packaging film made of a material containing gelatin and a small amount of collagen is also known, in which the packaging film prevents an article inside from absorbing moisture and releasing flavor, aroma, and other ingredients during storage, and the packaging film is dissolved with hot water during use (see PTL 2).

Further, an edible film with improved moisture permeability resistance and heat sealability has been proposed, in which a hydrophobic layer such as food wax is formed on one side of an edible base film formed of a mixture of agar and gelatin (see PTL 3). An edible film with excellent heat solubility, heat sealability, and processability has also been proposed, which contains a thickener containing at least inulin, and other thickeners including agar, carrageenan, gelatin, furcelleran, pectin, and the like (see PTL 4).

In recent years, in light of global environmental conservation, films with high biodegradability using naturally derived materials have been expected to be developed as an alternative to conventional plastic films made of petroleum-derived materials. In terms of safety and price, gelatin mainly made of protein has drawn attention as an alternative to petroleum-derived materials and as a film material for packaging.

RELATED ART DOCUMENT

PATENT DOCUMENT

PTL 1: JP-A-H6-105660
PTL 2: JP-A-H6-183456
PTL 3: JP-A-2002-95426
PTL 4: JP-A-2008-79525

SUMMARY

PROBLEMS TO BE SOLVED BY THE DISCLOSURE

However, the conventional gelatin-containing films described above do not have sufficient mechanical properties such as strength and elongation. Further improvement is required to make films tougher and excellent in moldability, particularly for use in individual packaging applications for foods and chemical agents.

In particular, when liquid is packaged, there is concern about leakage of the liquid if the seal portion has low strength. Further improvement of sealability is also required.

In such a background, the present disclosure provides: a gelatin-containing water-soluble film with excellent water solubility, excellent mechanical properties such as film strength and elongation, and excellent sealability; a chemical agent package using the same; and methods for producing the water-soluble film and the chemical agent package.

MEANS FOR SOLVING THE PROBLEMS

The inventors of the present disclosure have conducted elaborate studies in view of such a situation and found that a water-soluble film with high compatibility with gelatin and excellent water solubility, mechanical properties, and sealability is obtained by using a modified polyvinyl alcohol resin as a material used in combination with gelatin.

Since the polyvinyl alcohol resin is a biodegradable resin, the above object can be achieved without significantly reducing the biodegradability of the water-soluble film as a whole. In addition, the proportion of petroleum-derived material can be reduced, compared with conventional water-soluble films made of polyvinyl alcohol resins.

Specifically, the present disclosure has the following aspects.

[1] A water-soluble film containing gelatin and a polyvinyl alcohol resin (A), wherein the polyvinyl alcohol resin (A) contains a modified polyvinyl alcohol resin.
[2] The water-soluble film according to [1], wherein the modified polyvinyl alcohol resin contains at least one modified polyvinyl alcohol resin selected from the group consisting of an anionic group-modified polyvinyl alcohol, a pyrrolidone ring group-modified polyvinyl alcohol, and an amino group-modified polyvinyl alcohol.
[3] The water-soluble film according to [1] or [2], further containing a plasticizer.
[4] The water-soluble film according to any one of [1] to [3], wherein the water-soluble film has a water content of 3 to 15% by mass.
[5] The water-soluble film according to any one of [1] to [4], wherein the water-soluble film is configured for chemical agent packaging.
[6] The water-soluble film according to any one of [1] to [5], wherein when the water-soluble film is in static contact with a mixed solution of 11.2% by mass of propylene glycol, 13.4% by mass of glycerin, 8.4% by mass of ethanolamine, and 11.8% by mass of water, with a pH of 9.5, for 3 weeks, a rate of increase in dissolution time of the film is less than 70%.
[7] The water-soluble film according to any one of [1] to [6], wherein when the water-soluble film is in static contact with a mixed solution of 6.2% by mass of propylene glycol, 10.9% by mass of glycerin, 7.6% by mass of ethanolamine, and 12.5% by mass of water, with a pH of 7.0, for 3 weeks, a rate of increase in dissolution time of the film is less than 70%.
[8] A chemical agent package including a package bag formed from the water-soluble film according to any one of [1] to [7] and a chemical agent contained in the package bag.
[9] The chemical agent package according to [8], wherein the chemical agent is a liquid detergent.
[10] The chemical agent package according to [9], wherein the liquid detergent has a pH of 6 to 9 when dissolved or dispersed in water.
[11] A method for producing the water-soluble film according to any one of [1] to [7], the method including: a casting step of preparing a film-forming material containing gelatin and a modified polyvinyl alcohol resin, and casting the film-forming material onto a cast surface; and a drying step of drying the casted film-forming material.
[12] A method for producing the chemical agent package according to any one of [8] to [10], the method including steps of: preparing a first water-soluble film, a second water-soluble film, and a chemical agent, allowing the first water-soluble film and the second water-soluble film to face each other with the chemical agent interposed, and bringing the first water-soluble film and the second water-soluble film into partial abutment with each other; and press-bonding an abutment portion of the first water-soluble film and the second water-soluble film.

## EFFECTS OF THE DISCLOSURE

The water-soluble film according to the present disclosure has high compatibility between gelatin and the modified polyvinyl alcohol resin, has excellent water solubility (solubility), and has excellent mechanical properties and sealability. Further, reduction in film solubility over time is suppressed when the water-soluble film is formed into a package. The water-soluble film is therefore suitable for packaging applications and is excellent particularly for individual packages for chemical agents and foods.

## EMBODIMENTS OF THE DISCLOSURE

The present disclosure will be described below based on exemplary embodiments for carrying out the present disclosure. However, it should be understood that the present disclosure is not limited to the embodiments described below.
As used herein, the expression "X to Y" (X and Y are each a given number) is intended to encompass "preferably more than X" or "preferably less than Y" unless otherwise specified, in addition to the meaning of "X or more and Y or less."
The expression "X or more" (X is a given number) or "Y or less" (Y is a given number) is intended to encompass "preferably greater than X" or "preferably less than Y."
Further, the expression "x and/or y" (x and y are each a given configuration) is intended to mean at least one of x and y and mean the following three meanings: only x; only y; and x and y.
For numerical ranges described herein in steps, the upper or lower limit of the numerical range in one step may be combined as desired with the upper or lower limit of the numerical range in another step. In the numerical ranges described herein, the upper or lower limits of the numerical range may be replaced by values shown in the examples.
As used herein, a main component refers to a component that has a major effect on the properties of a target and the content of the component in the target is usually 50% by mass or more, preferably 55% by mass or more, more preferably 60% by mass or more, even more preferably 70% by mass or more, and may be 100% by mass.
In the present disclosure, a "water-soluble film" means a film soluble in water around normal temperature (20°C).

In the present disclosure, the solubility of the film is determined as follows.

The film is cut into a size of 3 cm × 5 cm, which is put into a 1 L beaker containing water (1 L) and secured with a jig. With the water temperature kept at 20°C, the water is stirred with a stirrer (rotor length 3 cm, rotation speed 750 rpm), and if insoluble particles of the film with a diameter of 1 mm or more are not visually recognized, the film is determined as being soluble.

A water-soluble film according to an embodiment of the present disclosure (which hereinafter may be referred to as "the present water-soluble film") contains gelatin and a polyvinyl alcohol resin (A). A chemical agent package according to an embodiment of the present disclosure includes a package bag formed from the water-soluble film and a chemical agent contained in the package bag. These will be described below.

In the present disclosure, polyvinyl alcohol may be abbreviated as "PVA."

The term "film" is meant to include "tape" and "sheet."

<Gelatin>

Gelatin is extracted from collagen which is the main component of bones and skin of animals such as cows and pigs, and chemically includes linear polymers (proteins) of amino acids as main components. Gelatin is commonly used as an additive to foods as a gelling agent or a thickening agent.

Usually, a gelatin solution gels at 25°C or lower and dissolves at 30°C or higher. Gelatin is classified into two types, acid-treated gelatin and alkali-treated gelatin, depending on its production method, and each type has a different isoelectric point. The isoelectric point of acid-treated gelatin ranges widely from 6 to 9, while the isoelectric point of alkali-treated gelatin is in a narrow range around 5. Usually, using gelatin at a pH near the isoelectric point leads to decrease in gel strength and gel turbidity.

In the water-soluble film according to the present disclosure, it is preferable to use alkali-treated gelatin because of its excellent physical properties.

<PVA Resin (A)>

One type of PVA resin (A) may be used alone, or two or more types of PVA resins that differ in at least one of saponification degree, viscosity, modified species, and modification degree may be used.

In the water-soluble film according to the present disclosure, PVA resin (A) contains a modified PVA resin as an essential component.

In particular, the amount of the modified PVA resin is preferably 50% by mass or more in PVA resin (A), more preferably 55% by mass or more, even more preferably 60% by mass or more, particularly preferably 70% by mass or more, and may be 100% by mass.

Specifically, preferred examples of PVA resin (A) containing a modified PVA resin include a PVA resin containing one type of modified PVA resin, a PVA resin containing two or more types of modified PVA resins, and a PVA resin containing two or more types of modified PVA resins and an unmodified PVA in combination. Among those, PVA resin (A) preferably includes only one type of modified PVA resin or includes a modified PVA resin and an unmodified PVA in combination.

The mass content ratio between the modified PVA resin and the unmodified PVA is preferably modified PVA resin/unmodified PVA = 100/0 to 50/50 and particularly preferably 100/0 to 55/45, and in terms of film properties such as water solubility and water sealability, preferably 99/1 to 55/45, particularly preferably 95/5 to 60/40, and even more preferably 90/10 to 70/30.

The modified PVA resin used in the present water-soluble film is preferably a modified PVA resin having at least one modified group selected from anionic groups such as carboxy group, sulfonic acid group, and phosphoric acid group, pyrrolidone ring groups, and amino groups, in terms of compatibility with gelatin and film solubility. Among these, an anionic group-modified PVA resin is preferably used. Examples of the anionic group include carboxy group, sulfonic acid group, and phosphoric acid group. In terms of long-term stability of solubility, carboxy group and sulfonic acid group are preferred, and a carboxy group-modified PVA resin is particularly preferred.

PVA resin (A) preferably has an average saponification degree of 80 mol% or more, particularly preferably 82 to 99.9 mol%, even more preferably 85 to 98 mol%, and especially preferably 90 to 96 mol%. If the average saponification degree is too small, the solubility of the film in water tends to be reduced, or the solubility of the film tends to be reduced over time depending on the agent to be packaged. If the average saponification degree is too large, the solubility in water also tends to be reduced.

When an unmodified PVA is used as PVA resin (A), the average saponification degree of the unmodified PVA is preferably 80 mol% or more, particularly preferably 82 to 99 mol%, and even more preferably 85 to 90 mol%. If the average saponification degree is too small, the solubility of the water-soluble film in water tends to be reduced. If the average saponification degree is too large, the solubility in water also tends to be reduced.

The average saponification degree of PVA resin (A) means that the average saponification degree of the entire PVA resin contained in the present water-soluble film is within these ranges.

When a modified PVA resin is used as PVA resin (A), the average saponification degree of the modified PVA resin is preferably 80 mol% or more, particularly preferably 85 to 99.9 mol%, and even more preferably 90 to 99 mol%. If the average saponification degree is too small, the solubility of the water-soluble film in water tends to be reduced over time, depending on the pH of the chemical agent to be packaged. If the average saponification degree is too large, the solubility of the water-soluble film in water tends to be significantly reduced due to thermal hysteresis during film formation.

When an anionic group-modified PVA resin is used as the modified PVA resin, its saponification degree is preferably 85 to 99.9 mol%, particularly preferably 88 to 98 mol%, even more preferably 90 to 97 mol%, and especially preferably 90 to 95 mol%.

The 4 mass% aqueous solution viscosity of PVA resin (A) as measured at 20°C is preferably 5 to 60 mPa·s, particularly preferably 10 to 45 mPa·s, even more preferably 15 to 40 mPa·s, and especially preferably 21 to 35 mPa·s. If the viscosity is too small, the mechanical strength of the water-soluble film tends to be reduced. If the viscosity is too large, the productivity tends to be reduced due to high aqueous solution viscosity during film formation.

The 4 mass% aqueous solution viscosity of PVA resin (A) as measured at 20°C means that the 4 mass% aqueous solution viscosity of the entire PVA resin contained in the water-soluble film as measured at 20°C is within these ranges.

When an unmodified PVA resin is used as PVA resin (A), the 4 mass% aqueous solution viscosity of the unmodified PVA resin as measured at 20°C is preferably 10 to 60 mPa·s, particularly preferably 20 to 50 mPa·s, and even more preferably 30 to 45 mPa·s. If the viscosity is too small, the mechanical strength of the water-soluble film as a packaging material tends to be reduced. If the viscosity is too large, the productivity tends to be reduced due to high aqueous solution viscosity during film formation.

When a modified PVA resin is used as PVA resin (A), the 4 mass% aqueous solution viscosity of the modified PVA resin as measured at 20°C is preferably 5 to 50 mPa·s, particularly preferably 10 to 40 mPa·s, and even more preferably 15 to 35 mPa·s. If the viscosity is too small, the mechanical strength of the water-soluble film as a packaging material tends to be reduced. If the viscosity is too large, the productivity tends to be reduced due to high aqueous solution viscosity during film formation.

The modification degree of PVA resin (A) is preferably 1 to 20 mol%, even more preferably 1.5 to 15 mol%, and particularly preferably 2 to 12 mol%. If the modification degree is too small, the solubility of the water-soluble film in water tends to be reduced. If the modification degree is too large, the productivity of the PVA resin tends to be reduced, the biodegradability tends to be reduced, and blocking of the water-soluble film is more likely to occur.

When an anionic group-modified PVA resin is used as the modified PVA resin, the modification degree of the anionic group-modified PVA resin is preferably 1 to 10 mol%, even more preferably 1.5 to 9 mol%, and particularly preferably 2 to 8 mol%. If the modification degree is too small, the solubility of the water-soluble film in water tends to be reduced. If the modification degree is too large, the productivity of the PVA resin tends to be reduced, the biodegradability tends to be reduced, and blocking of the water-soluble film is more likely to occur.

The average saponification degree is measured in conformity with JIS K 6726 3.5. The 4 mass% aqueous solution viscosity is measured in conformity with JIS K 6726 3.11.2.

The unmodified PVA may be produced by saponifying a polyvinyl ester resin obtained by polymerizing a vinyl ester compound.

Examples of the vinyl ester compound include vinyl formate, vinyl acetate, vinyl trifluoroacetate, vinyl propionate, vinyl butyrate, vinyl caprate, vinyl laurate, vinyl versatate, vinyl palmitate, and vinyl stearate. Vinyl acetate is preferably used. The above vinyl ester compounds may be used alone or in combination of two or more.

As a polymerization method for the vinyl ester compound, any of known polymerization methods such as solution polymerization, emulsion polymerization, and suspension polymerization may be used. The polymerization is typically performed by solution polymerization using alcohol such as methanol, ethanol, or isopropyl alcohol as a solvent.

A polymerization catalyst may be selected as appropriate from known polymerization catalysts, including azo catalysts such as azobisisobutyronitrile; and peroxide catalysts such as acetyl peroxide, benzoyl peroxide, and lauroyl peroxide, according to the polymerization method. The reaction temperature of polymerization is from 50°C to around a boiling point.

The saponification may be performed by a known method and typically performed in the presence of a saponification catalyst by dissolving the resulting polymer in alcohol. Examples of the alcohol include methanol, ethanol, and butanol. The copolymer concentration in the alcohol is from 20 to 50% by mass in terms of solubility.

Examples of the saponification catalyst include alkali catalysts such as alkali metal hydroxides such as sodium hydroxide, potassium hydroxide, sodium methylate, sodium ethylate, and potassium methylate, and alcoholates. Acid catalysts may be used. The saponification catalyst is preferably used in the amount of 1 to 100 millimolar equivalents relative to the vinyl ester compound.

The modified PVA resin may be produced, for example, by saponifying a copolymer of a vinyl ester compound and an unsaturated monomer or by post-modifying an unmodified PVA.

The same compounds as in the case of unmodified PVA may be used as the vinyl ester compound.

Examples of the unsaturated monomer copolymerizable with the vinyl ester monomer that is used in the modified PVA resin obtained by copolymerization (copolymerized modified PVA resin) include: olefins such as ethylene, propylene, isobutylene, α-octene, α-dodecene, and α-octadecene; hydroxyl-containing α-olefins such as 3-buten-1-ol, 4-penten-1-ol, and 5-hexen-1-ol, and acylation products and other derivatives of these hydroxyl-containing α-olefins; unsaturated acids such as acrylic acid, methacrylic acid, crotonic acid, maleic acid, maleic anhydride, itaconic acid, and undecylenic acid, and salts, monoesters, and dialkyl esters of these unsaturated acids; amides such as diacetoneacrylamide, acrylamide, and methacrylamide; and olefinsulfonic acids such as ethylenesulfonic acid, allylsulfonic acid, and methallylsulfonic acid, and salts of these olefinsulfonic acids, and N-vinylpyrrolidone. These may be used alone or in combination of two or more.

Examples of the modified PVA resin (post-modified PVA resin) obtained by post-reaction include those having acetoacetyl groups by reaction with diketene, those having polyalkylene oxide groups by reaction with ethylene oxide, those having hydroxyalkyl groups by reaction with epoxy compounds, and those obtained by reacting aldehyde compounds having various functional groups with PVA resins by esterification, acetalization, urethanation, etherification, grafting, phosphoric acid esterification, oxyalkylenation, or the like.

Other examples of the modified PVA resin include those having a primary hydroxyl group in a side chain, for example, in which the number of primary hydroxyl groups in a side chain is typically 1 to 5, preferably 1 to 2, and particularly preferably 1. Furthermore, the modified PVA resin preferably has a secondary hydroxyl group in addition to the primary hydroxyl group. Examples of such a modified PVA resin include a modified PVA resin having a hydroxyalkyl group in a side chain and a modified PVA resin having a 1,2-diol structural unit in a side chain. The modified PVA resin having a 1,2-diol structural unit in a side chain may be produced by, for example, (i) a method in which a copolymer of vinyl acetate and 3,4-diacetoxy-1-butene is saponified; (ii) a method in which a copolymer of vinyl acetate and vinyl ethylene carbonate is saponified and decarbonated; (iii) a method in which a copolymer of vinyl acetate and 2,2-dialkyl-4-vinyl-1,3-dioxolane is saponified and deketalized; or (iv) a method in which a copolymer of vinyl acetate and glycerin monoallyl ether is saponified.

The copolymerization of a vinyl ester compound and a unsaturated monomer copolymerizable with the vinyl ester compound may be performed by the same method as in the case of unmodified PVA and is typically performed by a solution polymerization method using alcohol as a solvent. The same polymerization catalyst, saponification method, saponification catalyst, and the like as in the case of unmodified PVA may be selected as appropriate.

A carboxy group-modified PVA resin may be produced by any method. Examples of the method include (I) a method in which an unsaturated monomer having a carboxy group and a vinyl ester compound are copolymerized, and then the resulting copolymer is saponified; and (II) a method in which a vinyl ester compound is polymerized in the presence of alcohol, aldehyde or thiol having a carboxy group as a chain transfer agent, and then the resulting polymer is saponified.

The vinyl ester compound in the method (I) or (II) may be any of those described above, but vinyl acetate is preferred.

Examples of the unsaturated monomer having a carboxy group in the method (I) include ethylenically unsaturated dicarboxylic acids (maleic acid, fumaric acid, itaconic acid, etc.), or ethylenically unsaturated dicarboxylic acid monoesters (maleic acid monoalkyl ester, fumaric acid monoalkyl ester, itaconic acid monoalkyl ester, etc.), or ethylenically unsaturated dicarboxylic acid diesters (maleic acid dialkyl ester, fumaric acid dialkyl ester, itaconic acid dialkyl ester, etc.) [where these diesters need to be converted to carboxy groups by hydrolysis during saponification of the copolymer], or ethylenically unsaturated carboxylic anhydrides (maleic anhydride, itaconic anhydride, etc.), or ethylenically unsaturated monocarboxylic acid ((meth)acrylic acid, crotonic acid, etc.), and salts of these compounds. Among these, it is preferable to use maleic acid, maleic acid monoalkyl ester, maleic acid dialkyl ester, maleate, maleic anhydride, itaconic acid, itaconic acid monoalkyl ester, itaconic acid dialkyl ester, (meth)acrylic acid, or the like. It is more preferable to use a maleic acid monomer such as maleic acid, maleic acid monoalkyl ester, maleic acid dialkyl ester, maleate, or maleic anhydride. It is particularly preferable to use maleic acid monoalkyl ester. These may be used alone or in combination of two or more.

In the method (II), it is preferable to use a chain transfer agent. A thiol compound which usually has a large chain transfer effect is preferred as the chain transfer agent, and examples include the following compounds and their salts. These may be used alone or in combination of two or more.

$$HS{-}(CH_2)_n{-}COOH \qquad (1)$$

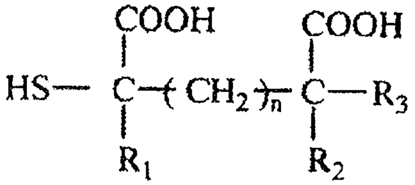 (2)

[In formulae (1) and (2), n is an integer of 0 to 5, and $R_1$, $R_2$, and $R_3$ are each a hydrogen atom or a lower alkyl group (which may contain a substituent).]

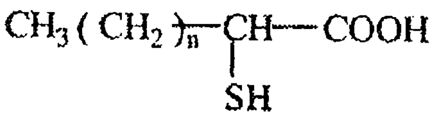 (3)

[In formula (3), n is an integer of 0 to 20.]

Specific examples include mercaptoacetic acid, 2-mercaptopropionic acid, 3-mercaptopropionic acid, and 2-mercaptostearic acid.

The unsaturated monomer having a carboxy group and the vinyl ester compound may be polymerized with other general monomer to an extent that does not impair the water solubility. Examples of the general monomer include alkyl esters of ethylenically unsaturated carboxylic acids, allyl esters of saturated carboxylic acids, $\alpha$-olefins, alkyl vinyl ethers, alkyl allyl ethers, (meth)acrylamide, (meth)acrylonitrile, styrene, and vinyl chloride.

The method for producing the carboxy group-modified PVA resin is not limited to the aforementioned methods. For example, polyvinyl alcohol (partially saponified or completely saponified) may be allowed to post-react with a carboxy-containing compound, such as dicarboxylic acid, aldehyde carboxylic acid, or hydroxycarboxylic acid, having a functional group reactive with a hydroxyl group.

A sulfonic acid-modified PVA resin may be produced by, for example, a method in which a vinyl ester compound is reacted with a comonomer such as vinylsulfonic acid, styrenesulfonic acid, allylsulfonic acid, methallylsulfonic acid or 2-acrylamido-2-methylpropanesulfonic acid, and the resulting copolymer is saponified; or method in which vinylsulfonic acid or its salt, 2-acrylamido-2-methylpropanesulfonic acid or its salt, or the like is introduced into PVA by Michael addition reaction.

In terms of film properties such as solubility and mechanical properties, the proportion of PVA resin (A) in the water-soluble film is preferably 30% by mass or more, particularly preferably 35% by mass or more, and even more preferably 40% by mass or more. If the proportion of PVA resin (A) is too low, the solubility in water and the mechanical properties of the film tend to be reduced. The upper limit of the proportion of PVA resin (A) is typically 85% by mass or less, preferably 80% by mass or less, and particularly preferably 75% by mass or less, in terms of long-term shape stability of the package.

The mass content ratio between gelatin and PVA resin (A) is preferably gelatin/PVA resin (A) = 1/99 to 99/1, particularly preferably 5/95 to 80/20, even more preferably 10/90 to 60/40, and especially preferably 15/85 to 45/55.

If the proportion of gelatin is too high, the compatibility with PVA resin (A) tends to be poor, and the solubility of the film in water may be reduced. In addition, the mechanical properties such as film strength tend to be reduced.

<Plasticizer>

In the present water-soluble film, a plasticizer is preferably used in addition to gelatin and PVA resin (A) in order to impart appropriate flexibility to the film. One type of plasticizer may be used alone, or two or more types of plasticizers may be used in combination. It is preferable to use two or more types of plasticizers in combination in terms of mechanical properties and formability of the film.

Examples of the plasticizer include glycerol such as glycerin, diglycerin, and triglycerin; alkylene glycols such as diethylene glycol, triethylene glycol, polyethylene glycol, propylene glycol, polypropylene glycol, and dipropylene glycol; trimethylolpropane, and sugar alcohols such as sorbitol, xylitol, and maltitol. These may be used alone or in combination of two or more. Among these, glycerin, diglycerin, and polyethylene glycol are preferred in terms of easy availability and obtaining a plasticizing effect with a small amount. Sorbitol is preferred in terms of long-term stability of the package. A combination of glycerin and sorbitol is also preferred.

The proportion of the plasticizer is preferably 10 to 60 parts by mass per 100 parts by mass of a total of gelatin and PVA resin (A), particularly preferably 15 to 55 parts by mass, even more preferably 18 to 50 parts by mass, and especially preferably 20 to 45 parts by mass. If the proportion of the plasticizer is too low, the plasticizing effect is low, resulting in lower processability, or the toughness of the water-soluble film formed into a package tends to be reduced over time. If the

proportion of the plasticizer is too high, the film strength tends to be reduced, or blocking tends to occur.

<Filler>

The present water-soluble film may further contain a filler, if necessary.

The filler is contained in order to increase antiblocking properties. The filler is not limited, and any of organic fillers and inorganic fillers may be used. In particular, an organic filler is preferably used. These may be used alone or in combination of two or more. The filler preferably has an average particle diameter of 0.1 to 50 μm and particularly preferably 1 to 35 μm.

The average particle diameter of the filler is calculated based on a D50 value of cumulative volume distribution (a particle diameter of cumulative 50% of particles) measured by a laser diffraction particle size distribution analyzer.

The organic filler refers to a particulate substance (primary particles) of an organic compound in any form such as needle form, bar form, lamellar form, scale form, and spherical form, or an agglomerate (secondary particles) of the particulate substance.

The organic filler is mainly selected from polymer compounds, and examples include melamine resins, polymethyl (meth)acrylate resins, polystyrene resins, starches, polylactic acids, and other biodegradable resins. Among these, polymethyl (meth)acrylate resins, polystyrene resins, and biodegradable resins such as starches are preferred. In particular, starches are preferred in terms of dispersibility in PVA resin (A).

Examples of the starches include raw starches (corn starch, potato starch, sweet potato starch, wheat starch, cassava starch, sago starch, tapioca starch, sorghum starch, rice starch, pea starch, kudzu starch, bracken starch, lotus starch, water chestnut starch, etc.), physically modified starches (α-starch, fractionated amylose, moist heat-treated starch, etc.), enzyme-modified starches (hydrolyzed dextrin, enzyme-decomposed dextrin, amylose, etc.), chemically degraded starches (acid-treated starch, hypochlorous acid-oxidized starch, dialdehyde starch, etc.), and chemically modified starch derivatives (esterified starch, etherified starch, cationized starch, crosslinked starch, etc.). Among these, raw starches, particularly corn starch and rice starch, are preferably used in terms of easy availability and cost efficiency.

The organic filler preferably has an average particle diameter of 3 to 50 μm, particularly preferably 5 to 40 μm, and even more preferably 10 to 35 μm. If the average particle diameter is too small, the film is more susceptible to blocking. If the average particle diameter is too large, the particles of the filler are likely to agglomerate, resulting in poor dispersibility, or the film tends to suffer pinholes when stretched during film processing.

The inorganic filler refers to a particulate substance (primary particles) of an inorganic compound in any form such as needle form, bar form, lamellar form, scale form, and spherical form, or an agglomerate (secondary particles) of the particulate substance.

Examples of the inorganic filler include inorganic oxide compounds such as silica (silicon dioxide), diatomite, titanium oxide, calcium oxide, magnesium oxide, aluminum oxide, barium oxide, germanium oxide, tin oxide, and zinc oxide, talc, clay, kaolin, mica, asbestos, gypsum, graphite, glass balloons, glass beads, calcium sulfate, barium sulfate, ammonium sulfate, calcium sulfite, calcium carbonate, calcium carbonate whisker, magnesium carbonate, dawsonite, dolomite, potassium titanate, carbon black, glass fibers, alumina fibers, boron fibers, processed mineral fibers, carbon fibers, hollow carbon spheres, bentonite, montmorillonite, copper powder, sodium sulfate, potassium sulfate, zinc sulfate, copper sulfate, iron sulfate, magnesium sulfate, aluminum sulfate, aluminum potassium sulfate, ammonium nitrate, sodium nitrate, potassium nitrate, aluminum nitrate, ammonium chloride, sodium chloride, potassium chloride, magnesium chloride, calcium chloride, sodium phosphate, and potassium chromate. These may be used alone or in combination of two or more.

Among these, silica, inorganic oxide compounds, and talc are preferred. In particular, silica, titanium oxide, and talc are preferred, and silica is even more preferred.

The inorganic filler preferably has an average particle diameter of 1 to 20 μm, particularly preferably 2 to 15 μm, and even more preferably 3 to 10 μm. If the average particle diameter is too small, the flexibility and/or toughness of the film tends to be reduced, or the film tends to be more susceptible to blocking. If the average particle diameter is too large, the film tends to suffer pinholes when stretched during film processing.

The proportion of the filler is preferably 1 to 30 parts by mass per 100 parts by mass of gelatin and PVA resin (A), particularly preferably 2 to 25 parts by mass, and even more preferably 2.5 to 20 parts by mass. If the proportion of the filler is too low, the film is more susceptible to blocking. If the proportion of the filler is too high, the flexibility and/or toughness of the film tends to be reduced.

In terms of the balance between the antiblocking properties and the mechanical properties and sealability of the film, the filler is preferably present in an amount of 12 parts by mass or less per 100 parts by mass of PVA resin (A), particularly preferably 1 to 11 parts by mass, even more preferably 2 to 10 parts by mass, and especially preferably 2.5 to 9 parts by mass.

<Surfactant>

The present water-soluble film may further contain a surfactant if necessary.

The surfactant is contained in order to improve the peelability from a cast surface during film production. Typical examples include nonionic surfactants, cationic surfactants, and anionic surfactants.

Examples of the surfactant include polyoxyethylene nonyl phenyl ether, polyoxyethylene octyl nonyl ether, polyoxyethylene dodecyl phenyl ether, polyoxyethylene alkyl allyl ether, polyoxyethylene sorbitan monolaurate, polyoxyethylene sorbitan monopalmitate, polyoxyethylene sorbitan monostearate, polyoxyethylene sorbitan monooleate, polyoxyalkylene alkyl ether phosphate monoethanolamine salts, polyoxyethylene alkylamino ethers such as polyoxyethylene laurylamino ether and polyoxyethylene stearylamino ether, sorbitan monopalmitate, sorbitan monostearate, glycerol stearate, and sucrose fatty acid esters. These may be used alone or in combination of two or more. Among these, polyoxyalkylene alkyl ether phosphate monoethanolamine salts and polyoxyethylene laurylamino ether are preferred in terms of production stability. These surfactants may be used alone or in combination of two or more.

The proportion of the surfactant is preferably 0.01 to 3 parts by mass per 100 parts by mass of a total of gelatin and PVA resin (A), particularly preferably 0.05 to 2.5 parts by mass, and even more preferably 0.1 to 2 parts by mass. If the proportion of the surfactant is too low, the peelability of the formed film from a cast surface of a film forming apparatus tends to be reduced, resulting in lower productivity. If the proportion of the surfactant is too high, blocking tends to occur, or the adhesive strength tends to be reduced during sealing performed when the film is formed into a package.

<Other Components>

The present water-soluble film may contain other components, such as a water-soluble polymer other than PVA resin (A) (e.g., sodium polyacrylate, polyethylene oxide, polyvinyl pyrrolidone, dextrin, chitosan, chitin, methyl cellulose, hydroxyethyl cellulose), perfume, antirust agent, colorant, bulking agent, defoaming agent, UV absorber, liquid paraffins, fluorescent brightener, and bitter component (e.g., denatonium benzoate), to an extent that does not impair the object of the present disclosure. These may be used alone or in combination of two or more.

The proportion of the other components is preferably 5 parts by mass or less per 100 parts by mass of PVA resin (A), particularly preferably 1 part by mass or less, and even more preferably 0.5 parts by mass or less. The lower limit is typically 0 parts by mass. If the proportion of the other components is too high, the compatibility with gelatin tends to be reduced, and the durability tends to be reduced.

In the present water-soluble film, an antioxidant may be blended. Examples of the antioxidant include sulfites such as sodium sulfite, potassium sulfite, calcium sulfite, and ammonium sulfite, tartaric acid, ascorbic acid, sodium thiosulfate, catechol, and rongalite. Among these, sulfites are preferred, and sodium sulfite is particularly preferred. The amount of the antioxidant is preferably 0.1 to 10 parts by mass per 100 parts by mass of PVA resin (A), particularly preferably 0.2 to 5 parts by mass, and even more preferably 0.3 to 3 parts by mass.

<<Production of Water-Soluble Film>>

In the present water-soluble film, gelatin and PVA resin (A), preferably a plasticizer, and if necessary other components such as a filler and a surfactant as described above are blended and dissolved or dispersed in water to prepare a film-forming material, and the film-forming material is formed into a film. The production of the water-soluble film involves a casting step of casting the film-forming material onto a cast surface; and a drying step of drying the casted film-forming material.

<Dissolution Step>

In a dissolution step, the blended components are dissolved or dispersed in water to prepare an aqueous solution or an aqueous dispersion as a film-forming material.

In preparation of the film-forming material, gelatin, PVA resin (A), and other additives may be mixed by any method. Examples of the mixing method include: (i) a method in which gelatin, PVA resin (A), and other additives are mixed into a mixture, which is then mixed with water and dissolved in water; (ii) a method in which PVA resin (A) and other additives are dissolved in water, and then gelatin is mixed with the resulting solution; (iii) a method in which gelatin, PVA resin (A), and other additives are separately dissolved in water, and the resulting solutions are mixed; and (iv) a method in which gelatin and PVA resin (A) are separately dissolved in water, and other additives are mixed with the resulting solutions and dissolved.

Normal-temperature dissolution, high-temperature dissolution, pressure dissolution, or the like is typically employed as a dissolution method when the components are dissolved in water. Among these, high-temperature dissolution and pressure dissolution are preferred in terms of less undissolved residues and excellent productivity.

In high-temperature dissolution, the dissolution temperature is typically 80 to 100°C and preferably 90 to 100°C. In pressure dissolution, the dissolution temperature is typically 80 to 130°C and preferably 90 to 120°C. In particular, the dissolution temperature for gelatin is preferably 50 to 90°C, particularly preferably 55 to 85°C, and even more preferably 60 to 80°C.

The dissolution time is typically 1 to 20 hours, preferably 2 to 15 hours, even more preferably 3 to 10 hours. If the dissolution time is too short, undissolved residues tend to remain. If the dissolution time is too long, the productivity tends to be reduced.

After dissolution, the resulting film-forming material is further subjected to a defoaming process. Exemplary methods of the defoaming include static defoaming, vacuum defoaming, and twinscrew extrusion defoaming. Among those, static defoaming and twinscrew extrusion defoaming are preferred.

The defoaming temperature is typically 50 to 100°C, preferably 55 to 95°C, and particularly preferably 60 to 80°C. If the defoaming temperature is too high, the protein which is a component of gelatin is denatured, resulting in coloring or strength reduction. If the defoaming temperature is too low, the viscosity tends to be increased, requiring a longer time for defoaming, resulting in lower productivity.

The defoaming time is typically 2 to 30 hours and preferably 5 to 25 hours.

The film-forming material preferably has a solid content of 10 to 60% by mass, particularly preferably 12 to 50% by mass, and even more preferably 15 to 40% by mass. If the solid content is too low, the productivity of the film tends to be reduced. If the solid content is too high, the viscosity tends to be too high, requiring a longer time to defoam the film-forming material or causing die lines during film formation.

The film-forming material typically has a pH of 4 to 8 and preferably 4.8 to 7.5.

<Film Formation Step>

In a film formation step, the film-forming material prepared in the dissolution step is formed into a film, which is dried if necessary to prepare a water-soluble film having a particular water content.

As a film formation method, for example, melt extrusion or casting may be employed. In terms of accuracy in film thickness, casting is preferred.

In performing casting, for example, the film-forming material is ejected from a slit such as a T-slit die and casted onto a cast surface such as a metal surface of an endless belt or a drum roll, or a plastic substrate surface such as a polyethylene terephthalate film. The casted material is then dried and heated, if necessary, to produce a water-soluble film.

The water-soluble film peeled from the cast surface such as a plastic substrate surface in the film formation step is transported and taken up on a core, resulting in a film roll. The resulting film roll may be supplied as it is as a product. Preferably, the water-soluble film having a film width of a desired size may be supplied as a film roll.

The resulting present water-soluble film may have a plane surface. However, the film may be subjected to texture processing on one side or both sides, for example, by imparting an emboss pattern, a minute uneven pattern, or a special engraved pattern, in terms of antiblocking properties, sliding properties during processing, reduction in adhesion between the products, and appearance.

The thickness of the present water-soluble film is selected as appropriate according to applications and the like, preferably 10 to 120 μm, particularly preferably 15 to 110 μm, and even more preferably 20 to 100 μm. If the thickness is too small, the mechanical strength of the film tends to be reduced. If the thickness is too large, the speed of dissolution in water tends to be reduced, and the film formation efficiency also tends to be reduced.

The width of the present water-soluble film is selected as appropriate according to applications and the like, preferably 300 to 5000 mm, particularly preferably 500 to 4000 mm, and even more preferably 600 to 3000 mm. If the width is too small, the productivity tends to be reduced. If the width is too large, controlling slackness and film thickness tends to be difficult.

The length of the present water-soluble film is selected as appropriate according to applications and the like, preferably 100 to 20000 m, particularly preferably 800 to 15000 m, and even more preferably 1000 to 10000 m. If the length is too small, film switching tends to require time and effort, resulting in lower productivity. If the length is too large, tight winding tends to result in poor appearance.

The present water-soluble film preferably has a water content of 3 to 15% by mass in terms of mechanical strength and heat sealability, particularly preferably 5 to 9% by mass, and even more preferably 6 to 8% by mass. If the water content is too low, the film tends to be too hard, leading to reduction in formability in making a package or reduction in impact resistance of the package. If the water content is too high, blocking tends to occur. The water content may be adjusted by setting drying conditions and moisture control conditions as appropriate.

The water content is measured in conformity with JIS K 6726 3.4, and the resulting volatile content is defined as water content.

When a neutral to slightly alkaline liquid detergent is packaged in the present water-soluble film, decrease in solubility of the film over time is suppressed. When the water-soluble film is in static contact with a mixed solution of 6.2% by

mass of propylene glycol, 10.9% by mass of glycerin, 7.6% by mass of ethanolamine, and 12.5% by mass of water, with a pH of 7.5, for 3 weeks, a rate of increase in dissolution time of the film is preferably less than 70%, particularly preferably 65% or less, even more preferably 60% or less, and especially preferably 50% or less.

The present water-soluble film may be a monolayer or a multilayer structure in which another film or a resin layer is laminated.

The present water-soluble film is particularly useful for packaging (unit packaging) applications for chemical agents such as agricultural chemicals and detergents, and for edible applications (food packaging). Preferably, the foods to be packaged with the film may be in a granular form, a tablet form, or a powdery form, or may be dried foods such as ingredients and dried ingredients of instant foods.

<<Chemical Agent Package>>

A chemical agent package according to an embodiment of the present disclosure (which hereinafter may be referred to as "the present package") includes a package bag formed from the resulting water-soluble film and a chemical agent covered with the package bag. Since the present package includes a chemical agent packaged in the package bag formed from the water-soluble film, when the chemical agent with the package bag is put into water, the package bag (water-soluble film) on the surface is dissolved to expose the chemical agent, which is then dissolved or dispersed in water to fulfill the effect of the chemical agent. Thus, the present package is suitable as a chemical agent package containing a relatively small amount, such as a single dose, of a chemical agent.

Examples of the chemical agent include agricultural chemicals such as pesticide, disinfectant, and herbicide, fertilizers, and detergents. Detergents such as laundry detergents and dishwashing detergents are particularly preferred. The chemical agent may be liquid or solid. The solid chemical agent may be in a granular form, a tablet form, or a powdery form. The chemical agent is preferably dissolved or dispersed in water for use. In particular, the chemical agent package preferably contains a liquid detergent. The pH of the chemical agent may be alkaline, neutral, or acidic.

The liquid detergent preferably has a pH of 6 to 12 when dissolved or dispersed in water to a concentration of 1% by mass, particularly preferably 6 to 10, even more preferably 6.5 to 9, and especially preferably 7 to 8. The liquid detergent preferably has a moisture content of 15% by mass or less, particularly preferably 0.1 to 10% by mass, and even more preferably 0.1 to 7% by mass. When the moisture content of the liquid detergent is within the above range, the water-soluble film tends to be free from gelation or insolubilization and have excellent water solubility.

The pH is measured in conformity with JIS K 3362 8.3. The moisture content is measured in conformity with JIS K 3362 7.21.3.

<<Production of Chemical Agent Package>>

A known method may be employed to produce a chemical agent package by packaging a chemical agent such as liquid detergent using the water-soluble film.

For example, the chemical agent package may be produced by the steps of: preparing a first water-soluble film, a second water-soluble film, and a chemical agent, allowing the first water-soluble film and the second water-soluble film to face each other with the chemical agent interposed, and bringing the first water-soluble film and the second water-soluble film into partial abutment with each other; and press-bonding an abutment portion of the first water-soluble film and the second water-soluble film.

Specifically, the film (bottom film) is secured to a lower mold of a forming apparatus, and the bottom film is formed into a shape that conforms to the lower mold (such a shape that allows a chemical agent to be disposed inside).

On the other hand, the film (top film) is also secured to an upper mold of the forming apparatus. A chemical agent such as liquid detergent separately prepared is disposed (put) into the formed bottom film. Thereafter, the molds are clamped, so that the top film and the bottom film are brought into abutment with each other, and the abutment portion is press-bonded under vacuum. After press-bonding, the vacuum is removed, resulting in a chemical agent package in which the chemical agent is contained in the water-soluble film.

Exemplary methods for press-bonding the films include a heat sealing method, a water sealing method, and an adhesive sealing method. Among those, the water sealing method is preferably used because press-bonding conditions and the like are easily controlled.

EXAMPLES

The present disclosure will be described more specifically below using examples. However, it should be understood that the scope of the present disclosure is not limited to the following examples.

In the examples, "parts" are based on mass.

The following ingredients were prepared for water-soluble films.

(Gelatin)

(1) "#200" from Nitta Gelatin Inc., alkali-treated
(2) "Gelatin 21" from Nitta Gelatin Inc., alkali-treated
(3) "FGL-250TS" from Nitta Gelatin Inc., acid-treated

(PVA Resin (A))

Modified PVA resin (a1): carboxy group-modified PVA resin with a 4% aqueous solution viscosity of 22 mPa·s as measured at 20°C, an average saponification degree of 94 mol%, and a monomethyl maleate modification degree of 2.0 mol %
Unmodified PVA resin (a2): a 4% aqueous solution viscosity of 43 mPa·s as measured at 20°C and an average saponification degree of 88 mol%

(Plasticizer)

Plasticizer (b1): sorbitol
Plasticizer (b2): glycerin

(Other Additives)

Filler: starch (average particle diameter: 20 μm)
Surfactant: polyoxyalkylene alkyl ether phosphate monoethanolamine salt

[Example 1]

30 parts of gelatin, 70 parts of anionic group-modified PVA resin (a1) as PVA resin (A), 20 parts of sorbitol (b1) and 20 parts of glycerin (b2) as plasticizer (B), 0.2 parts of polyoxyalkylene alkyl ether phosphate monoethanolamine salt as a surfactant, and water were mixed, and these ingredients were dissolved in water to produce a resin composition aqueous dispersion with a solid concentration of 25% as a film-forming material. The resulting film-forming material was subjected to static defoaming at 60°C for 24 hours.

After static defoaming, the film-forming material was casted on a polyethylene terephthalate film and passed through a drying chamber (105°C) with a length of 3 m at 0.440 m/min for drying, resulting in a water-soluble film with a thickness of 87 μm (a water content of 7% by mass).

The compatibility, solubility, mechanical properties, and water sealability of the resulting water-soluble film were evaluated according to the methods described below.

<Compatibility>

[Evaluation Method]

Whether the water-soluble film had a sea-island structure was visually observed under a laser microscope and evaluated based on the following criteria.

[Evaluation Criteria]

(Very good) The water-soluble film had fewer sea-island structures and had almost no phase separation.
(Poor) The water-soluble film had a large island in a sea-island structure and clearly had phase separation.

<Solubility>

[Evaluation Method]

The water-soluble film obtained above was cut into a size of 35 mm × 35 mm, which was put into a 1 L beaker containing water (1 L) and secured with a jig. With the water temperature kept at 20°C, the water was stirred with a stirrer (rotor length: 30 mm, rotation speed: 750 rpm). If dispersion of insoluble particles with a diameter of 1 mm or more was not visually recognized, the film was determined as being soluble. The time taken for dissolution was evaluated based on the following criteria.

[Evaluation Criteria]

(Very good) The film was dissolved in less than 90 seconds.
(Good) The film was dissolved in 90 to 300 seconds.
(Poor) The film was not dissolved even after 300 seconds.

<Mechanical Properties>

[Evaluation Method]

The tensile strength and the tensile elongation of the water-soluble film obtained above were measured in conformity with JIS K 7127. The water-soluble film was allowed to stand under a moisture-controlled condition at 23°C and 50% RH for 24 hours before measurement. Under this environment, the tensile strength and the tensile elongation of the water-soluble film were measured using AUTOGRAPH AG-X Plus (from Shimadzu Corporation) at a pulling rate of 200 mm/min (film width: 15 mm, distance between chucks: 50 mm). The measurement values were evaluated based on the following criteria.

[Evaluation Criteria]

(Very good) The tensile strength was 10 MPa or more, and the tensile elongation was above 300%.
(Good) The tensile strength was 10 MPa or more, and the tensile elongation was 200 to 300%.
(Poor) The tensile strength was 0 to less than 10 MPa and/or the tensile elongation was less than 200%.

<Water Sealability>

[Evaluation Method]

The water-soluble film obtained above was cut into a size of 100 mm × 200 mm (top film) and a size of 100 mm × 100 mm (bottom film), and a water sealing test was conducted. Specifically, the water-soluble film was allowed to stand for 24 hours under a moisture-controlled condition at 23°C and 40% RH. Then, under this environment, the water-soluble film (bottom film) was secured on a 30 cm square glass plate, and water was applied with a PVA sponge roller ("CYGNUS ROLLER" from AION Co., Ltd.) containing water. The water-soluble film (top film) was then placed on the water-applied water-soluble film (bottom film), and another rubber roller (250 mm in width, 60 mm in diameter, 2750 g in weight) was rolled twice over the water-soluble films to press-bond the top and bottom films, resulting in a test specimen.

After 2 minutes, the peel strength of the seal portion of the test specimen was measured using AUTOGRAPH AG-X Plus (from Shimadzu Corporation) at a pulling rate of 100 mm/min (film width: 15 mm, distance between chucks: 20 mm). The break condition of the seal portion in the water seal test or the average test force with a stroke between 50 and 100 mm was evaluated based on the following criteria.

[Evaluation Criteria]

(Very good) The average test force was 5 N/15 mm or more and the water seal portion had cohesive failure.

(Good) The average test force was 5 N/15 mm or more, and the water seal portion had interfacial failure.
(Poor) The average test force was less than 5 N/15 mm.

<Examples 2 to 6, Comparative Example 1>

Water-soluble films were each produced in the same way as in Example 1 except that the formulation was changed as listed in Table 1. Each of the obtained water-soluble films was evaluated according to the same methods as in Example 1. The results are listed in Table 1 below.

Table 1

| | Gelatin | | PVA resin (A) | | Plasticizer content (parts) | | Filler (parts) | Surfactant (parts) | Water-soluble film | | | |
|---|---|---|---|---|---|---|---|---|---|---|---|---|
| | Type | Content (parts) | Type | Content (parts) | Glycerin | Sorbitol | | | Compatibility | Solubility | Mechanical properties | Water sealability |
| Example 1 | (1) | 30 | (a1) | 70 | 20 | 20 | - | 0.2 | Very good | Very good | Very good | Very good |
| Example 2 | (1) | 30 | (a1) | 70 | 20 | 20 | 8 | 0.2 | Very good | Very good | Very good | Very good |
| Example 3 | (1) | 30 | (a1)<br>(a2) | 60<br>10 | 20 | 20 | - | 0.2 | Very good | Very good | Very good | Very good |
| Example 4 | (1) | 30 | (a1)<br>(a2) | 60<br>10 | 20 | 20 | 8 | 0.2 | Very good | Very good | Very good | Very good |
| Example 5 | (2) | 30 | (a1)<br>(a2) | 60<br>10 | 20 | 20 | 8 | 0.2 | Very good | Very good | Very good | Very good |
| Example 6 | (3) | 30 | (a1)<br>(a2) | 60<br>10 | 20 | 20 | 8 | 0.2 | Very good | Good | Very good | Good |
| Comparative Example 1 | (1) | 25 | (a2) | 75 | 20 | 20 | - | 0.2 | Poor | Poor | Poor | - |

It was found that the water-sluble films of Examples 1 to 6 containing gelatin and the modified PVA resin had good compatibility between gelatin and the PVA resin and excellent solubility. Further, the mechanical properties and the water-sealability were excellent, indicating that the water-soluble films were suitable for packaging applications.
On the other hand, the water-soluble film of Comparative Example 1, which did not contain a modified PVA resin as the PVA resin, had poor compatibility with gelatin and poor solubility and mechanical properties, indicating that it was not suitable for practical use.

<Preparation of Package>

For each of the water-soluble films of Examples 2, 4, and 5 obtained above, a package was prepared according to the following procedure, using a package producing machine available from Engel Corporation.
Specifically, the water-soluble film was allowed to stand under a moisture-controlled condition at 23°C and 40% RH for 24 hours for controlling the moisture. Then, under this environment, the PVA water-soluble film (bottom film) was secured on a mold (package to be formed: 45 mm in length, 42 mm in width, and 30 mm in height) at a lower section of an apparatus, and the PVA water-soluble film (top film) was also secured to an upper section of the apparatus. The bottom film was heated for 4 seconds with a dryer producing hot air at 70°C, and the bottom film was vacuum-formed in the mold. Subsequently, 25 mL of a commercially available liquid laundry detergent (formulation: 11% by mass of propylene glycol, 7.5% by mass of glycerin, 67% by mass of a surfactant, and 14.2% by mass of water, with a pH of 7.5 (in undiluted form)) was put into the formed water-soluble film. Then, 0.25 g of water was applied over the entire top film surface (80 mm in length, 140 mm in width), and the top film and the bottom film were press-bonded together for 10 seconds. The vacuum was then removed, resulting in a package.
Using the resulting package, the compressive strength of the package and the long-term solubility of the film were evaluated according to the methods described below. The results are listed in Table 2.

<Compression Strength>

[Evaluation Method]

For the package produced by the method above, 1 hour after the production, the compression strength at break of the package was measured at a testing rate of 200 mm/min using AUTOGRAPH AG-X Plus (from Shimadzu Corporation). A load cell of 5 kN was used.

[Evaluation Criteria]

(Very good) The compression strength was greater than 500 N.
(Good) The compression strength was 200 to 500 N.
(Poor) The package was broken with a compression strength of less than 200 N.

<Long-Term Solubility>

[Evaluation Method]

A package was prepared according to the procedure for preparing a package as described above, using a package producing machine available from Engel Corporation, in which a liquid laundry detergent of each pH (formulation of detergent 1: 6.2% by mass of propylene glycol, 10.9% by mass of glycerin, 7.6% by mass of ethanolamine, and 12.5% by mass of water, with a pH of 7.0 (in undiluted form)) (formulation of detergent 2: 11.2% by mass of propylene glycol, 13.4% by mass of glycerin, 8.4% by mass of ethanolamine, and 11.8% by mass of water, with a pH of 9.5 (in undiluted form)) was wrapped in the water-soluble film.
The package was placed in a constant temperature and humidity chamber at 37°C and 70% RH and allowed to stand for 3 weeks, with the water-soluble film in contact with the detergent. Thereafter, the liquid detergent adhering to the film was wiped off, and the solubility test of the film at 20°C was conducted in the same manner as in the measurement of solubility described above.

[Evaluation Criteria]

The long-term solubility was evaluated by determining the rate of increase in the time required to dissolve the

water-soluble film as follows.

Rate of increase (%) = [{time (sec) required to dissolve the film after 3 weeks} - {time (sec) required to dissolve the water-soluble film at the time of package preparation}]/time (sec) required to dissolve the water-soluble film at the time of package preparation

(Detergent 1: pH 7.0)

(Very good) The rate of increase was less than 70%.
(Good) The rate of increase was 70 to 100%.
(Poor) The rate of increase was greater than 100%.

(Detergent 2: pH 9.5)

(Very good) The rate of increase was less than 70%.
(Good) The rate of increase was 70 to 100%.
(Poor) The rate of increase was greater than 100%.

Table 2

| | Package | Water-soluble film | |
|---|---|---|---|
| | Compression strength | Long-terms solubility | |
| | | pH7.0 | pH9.5 |
| Example 2 | Very good | Very good | Very good |
| Example 4 | Very good | Very good | Very good |
| Example 5 | Very good | Very good | Very good |

The water-soluble films of Examples 2, 4, and 5 containing gelatin and the modified PVA resin had sufficient compressive strength when made into packages, indicating that they were suitable for liquid chemical agent packaging and food packaging applications.

Further, the long-term solubility of the films did not decrease even when liquid detergents were packaged. In particular, even when neutral to slightly alkaline detergents were packaged, the long-term solubility of the films did not decrease, indicating that the films were suitable for liquid laundry detergent packaging applications.

While specific forms of the embodiments of the present disclosure have been shown in the above examples, the examples are merely illustrative and should not be interpreted in a limited sense. Various modifications apparent to those skilled in the art are intended to be included in the scope of the present disclosure.

INDUSTRIAL APPLICABILITY

The water-soluble film according to the present disclosure may be used for packaging (unit packaging) applications for chemical agents such as agricultural chemicals and detergents, transfer films, sanitary supplies such as napkins and disposal diapers, waste disposal supplies such as ostomy bags, medical supplies such as blood-absorbing sheets, temporary base materials for seeding sheets, seed tapes, and embroidery bases, and the like.

The film according to the present disclosure, which is a blend film of a naturally derived material and a PVA resin used for foods and pharmaceuticals, is also useful for edible applications (food packaging) and cosmetic packaging applications.

## Claims

1. A water-soluble film, comprising: gelatin and a polyvinyl alcohol resin (A), wherein the polyvinyl alcohol resin (A) comprises a modified polyvinyl alcohol resin.

2. The water-soluble film according to claim 1, wherein the modified polyvinyl alcohol resin comprises at least one modified polyvinyl alcohol resin selected from the group consisting of an anionic group-modified polyvinyl alcohol, a pyrrolidone ring group-modified polyvinyl alcohol, and an amino group-modified polyvinyl alcohol.

3. The water-soluble film according to claim 1 or 2, further comprising a plasticizer.

4. The water-soluble film according to any one of claims 1 to 3, wherein the water-soluble film has a water content of 3 to 15% by mass.

5. The water-soluble film according to any one of claims 1 to 4, wherein the water-soluble film is configured for chemical agent packaging.

6. The water-soluble film according to any one of claims 1 to 5, wherein when the water-soluble film is in static contact with a mixed solution of 11.2% by mass of propylene glycol, 13.4% by mass of glycerin, 8.4% by mass of ethanolamine, and 11.8% by mass of water, with a pH of 9.5, for 3 weeks, a rate of increase in dissolution time of the film is less than 70%.

7. The water-soluble film according to any one of claims 1 to 6, wherein when the water-soluble film is in static contact with a mixed solution of 6.2% by mass of propylene glycol, 10.9% by mass of glycerin, 7.6% by mass of ethanolamine, and 12.5% by mass of water, with a pH of 7.0, for 3 weeks, a rate of increase in dissolution time of the film is less than 70%.

8. A chemical agent package, comprising: a package bag comprising the water-soluble film according to any one of claims 1 to 7; and a chemical agent contained in the package bag.

9. The chemical agent package according to claim 8, wherein the chemical agent is a liquid detergent.

10. The chemical agent package according to claim 9, wherein the liquid detergent has a pH of 6 to 9 when dissolved or dispersed in water.

11. A method for producing the water-soluble film according to any one of claims 1 to 7, the method comprising: casting a film-forming material comprising gelatin and the modified polyvinyl alcohol resin onto a cast surface to obtain a casted film-forming material; and drying the casted film-forming material.

12. A method for producing the chemical agent package according to any one of claims 8 to 10, the method comprising: preparing a first water-soluble film, a second water-soluble film, and a chemical agent, allowing the first water-soluble film and the second water-soluble film to face each other with the chemical agent interposed, and bringing the first water-soluble film and the second water-soluble film into partial abutment with each other; and press-bonding an abutment portion of the first water-soluble film and the second water-soluble film.

## INTERNATIONAL SEARCH REPORT

International application No. **PCT/JP2024/011808**

**A. CLASSIFICATION OF SUBJECT MATTER**

***C08J 5/18***(2006.01)i; ***B65D 65/46***(2006.01)i; ***C08L 29/04***(2006.01)i; ***C08L 89/00***(2006.01)i
FI: C08J5/18 CEX; B65D65/46; C08L29/04 B; C08L89/00

According to International Patent Classification (IPC) or to both national classification and IPC

**B. FIELDS SEARCHED**

Minimum documentation searched (classification system followed by classification symbols)

C08J5/18; B65D65/46; C08L; C08K

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-278967 A (KURARAY CO., LTD.) 28 October 1997 (1997-10-28) claims, paragraphs [0009], [0015], examples | 1, 2, 6, 7, 11 |
| Y | | 3-5, 8-10, 12 |
| X | JP 62-121765 A (KURARAY CO., LTD.) 03 June 1987 (1987-06-03) claims, Problems to be solved by the invention, p. 2, upper right column, line 15 to lower left column, line 10, p. 2, lower right column, line 13 to p. 3, upper left column, line 3, examples | 1, 2, 6, 7, 11 |
| Y | | 3-5, 8-10, 12 |
| X | JP 2021-523257 A (MONOSOL, LLC) 02 September 2021 (2021-09-02) claims, paragraphs [0057]-[0060], [0084], [0131], examples | 1-12 |
| Y | | 3-5, 8-10, 12 |
| A | JP 2017-531088 A (MONOSOL, LLC) 19 October 2017 (2017-10-19) entire text | 1-12 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/011808**

**C. DOCUMENTS CONSIDERED TO BE RELEVANT**

| Category* | Citation of document, with indication, where appropriate, of the relevant passages | Relevant to claim No. |
|---|---|---|
| A | JP 6-299077 A (SUMITOMO SEIKA CHEMICALS CO., LTD.) 25 October 1994 (1994-10-25)<br>entire text | 1-12 |
| A | JP 2012-167397 A (UNIV KANSAI) 06 September 2012 (2012-09-06)<br>entire text | 1-12 |

Form PCT/ISA/210 (second sheet) (July 2022)

**INTERNATIONAL SEARCH REPORT**
**Information on patent family members**

International application No.
**PCT/JP2024/011808**

| Patent document cited in search report | Publication date (day/month/year) | Patent family member(s) | Publication date (day/month/year) |
|---|---|---|---|
| JP 9-278967 A | 28 October 1997 | (Family: none) | |
| JP 62-121765 A | 03 June 1987 | (Family: none) | |
| JP 2021-523257 A | 02 September 2021 | US 2019/0338221 A1<br>claims, examples<br>WO 2019/213347 A1<br>EP 3788097 A1<br>CN 112399986 A<br>CA 3098704 A<br>AU 2019263319 A | |
| JP 2017-531088 A | 19 October 2017 | US 2017/0233539 A1<br>WO 2016/061026 A1<br>EP 3207082 A1<br>AU 2015333763 A<br>KR 10-2017-0068556 A<br>CN 107001754 A<br>BR 112017007603 A | |
| JP 6-299077 A | 25 October 1994 | (Family: none) | |
| JP 2012-167397 A | 06 September 2012 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H6105660 A
- JP H6183456 A
- JP 2002095426 A
- JP 2008079525 A